# DEMANDE DE BREVET EUROPEEN

(11) **EP 0 937 392 A1**
(43) Date de publication de la demande: **25.08.1999**
(21) Numéro de dépôt: 98403228.4
(22) Date de dépôt: 18.12.1998
(51) Int. Cl.: A01N 25/00, A01N 25/26

(54) **Granulé répulsif pour animaux et son procédé de fabrication**

(30) Priorité: 19.12.1997 FR 9716186
(71) Demandeur: Al'Tech, 37340 Ambillou (FR)
(72) Inventeur: Barbieux, Serge, 77300 Fontainebleau (FR)
(74) Mandataire: Keib, Gérard

(57) **Abrégé**

Un granulé répulsif pour animaux comprend un support (1) imprégné d'une substance répulsive, le support étant enrobé d'une pellicule d'enrobage (2) contenant une substance attractive pour ces animaux.

Utilisation notamment pour éloigner les sangliers des cultures.

## Description

La présente invention concerne un granulé répulsif pour animaux, notamment pour un sanglier.

Elle concerne également un procédé de fabrication d'un tel granulé.

Lorsque l'on cherche à protéger une surface telle qu'un semis de maïs ou une prairie, contre des animaux susceptibles de provoquer des dégâts dans les cultures, il est connu d'entourer cette surface d'une clôture électrique.

Cette solution est cependant peu appropriée aux grands terrains et est relativement coûteuse.

On peut également disposer en différents endroits de la surface à protéger, des effaroucheurs visuels ou sonores (épouvantails, détonations....) qui permettent de garder à distance les animaux.

Ces moyens sont cependant peu efficaces, notamment à l'égard des sangliers.

Des répulsifs odorants ont également été essayés sans succès à l'égard de ces gros animaux.

De même, l'utilisation d'appâts pour détourner l'animal des cultures n'a qu'un faible pouvoir attractif et n'est pas suffisant pour protéger les cultures.

La présente invention a pour but de résoudre les inconvénients précités et de proposer un granulé répulsif efficace, notamment à l'égard des sangliers, et simple à utiliser.

Le granulé répulsif visé par l'invention est destiné à protéger les cultures et à éviter les dégâts faits par des animaux, notamment des sangliers.

Conformément à l'invention, ce granulé comprend un support imprégné d'une substance répulsive, le support étant enrobé d'une pellicule d'enrobage contenant une substance attractive pour ces animaux.

La combinaison de matières attractives et répulsives permet d'attirer l'animal sur la surface même à protéger, puis de repousser d'autant mieux celui-ci qu'il a été leurré par l'appât.

De préférence, la substance attractive est une matière appétente qui incite l'animal à consommer le granulé plutôt que les plantes cultivées, telles que le maïs semé.

La consommation du granulé aura pour effet de détruire la pellicule d'enrobage et rendre apparent le support imprégné d'une substance répulsive.

De préférence, cette substance répulsive est une substance amère qui contraint l'animal à renoncer rapidement à la consommation des granulés.

Selon une version avantageuse, la pellicule d'enrobage est étanche à l'eau et assure ainsi la conservation des granulés lorsque ceux-ci sont exposés aux intempéries ou à l'arrosage de la surface agricole protégée.

Selon un autre aspect de l'invention, un procédé pour fabriquer un granulé conforme à l'invention comprend les étapes suivantes:
a) mélange de farines végétales, d'amidon et d'une substance répulsive;
b) extrusion dudit mélange;
c) découpe sous forme de granulés du mélange extrudé;et
d) pulvérisation d'une pellicule d'enrobage contenant une substance attractive sur lesdits granulés.

D'autres particularités et avantages de l'invention apparaîtront encore dans la description ci-après.

Au dessin annexé, donné à titre d'exemples non limitatifs:

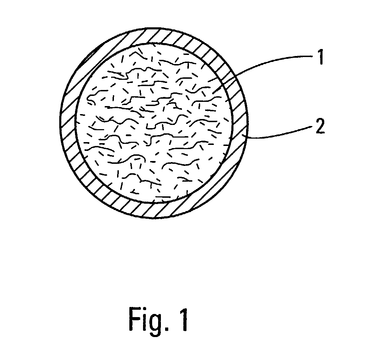

- la figure 1 est une vue en coupe d'un granulé conforme à l'invention.

En référence à la figure 1, un granulé répulsif pour animaux comprend un support 1 imprégné d'une substance répulsive, le support 1 étant enrobé d'une pellicule d'enrobage 2 contenant une substance attractive pour les animaux et notamment pour des sangliers.

La substance attractive est une matière appétente, telle que de l'huile de poisson.

La proportion d'huile de poisson dans le granulé est comprise entre 3% et 10% en poids.

La matière appétente peut également être de l'anéthol, de l'extrait de truffe ou de gland dont les odeurs d'anis, de truffe ou de gland incitent les sangliers à consommer les granulés, de préférence aux plants protégés, tels que des semis de maïs.

La substance répulsive est une substance amère, telle que de l'acide phosphorique par exemple.

Cet acide est simple à manipuler et ne présente aucune risque pour l'environnement, au contraire, même si les granulés sont dégradés dans le sol ou consommés par des animaux.

La proportion d'acide phosphorique est comprise entre 2% et 10% en poids du granulé.

La substance amère et astringente peut également être de l'acide picrique, de l'acide sulfurique, un extrait de piment ou encore du Bitrex ®.

La pellicule d'enrobage 2 est étanche à l'eau de sorte qu'elle rend le granulé insensible à l'humidité ou à la pluie.

Cette pellicule d'enrobage 2 peut être de la paraffine, dans une proportion comprise entre 0,5 et 3%.

Le support 1 comporte des farines végétales, telles que de la farine de maïs qui présente l'avantage d'offrir une analogie entre l'appât et le semis de maïs que l'on souhaite protéger. Un granulé à base de farine de maïs est particulièrement bien adapté à la protection des semis de maïs à l'égard des sangliers.

Des farines de pois protéagineux, du sorgho ou du lupin, peuvent également être employés pour former le support 1, à titre d'exemples non limitatifs. Le pouvoir attractif moindre de ces farines peut être compensé par une proportion plus élevée d'huile de poisson.

De préférence, le support 1 comporte en outre de la farine de poisson afin d'améliorer le pouvoir attractif du granulé vis-à-vis des animaux.

La proportion de farines végétales dans le granulé est comprise entre 50 et 80% en poids.

On peut également ajouter au granulé des agents anti-moisissures, tels que de l'acide propionique, des colorants, dans une proportion comprise entre 0,5 et 3%.

En outre, afin d'améliorer la texture du granulé et de favoriser sa fabrication par extrusion, de l'amidon peut être introduit dans le support 1, dans une proportion comprise entre 10% et 30% en poids du granulé.

Le procédé pour fabriquer des granulés comprend les étapes suivantes :
a) mélange de farines végétales, d'amidon et d'une substance répulsive;
b) extrusion du mélange;
c) découpe sous forme de granulés du mélange extrudé, et
d) pulvérisation d'une pellicule d'enrobage contenant une substance attractive sur les granulés.

Les granulés ainsi obtenus sont épandus dans une proportion de 10 à 20 kg /Ha sur la surface à protéger telle qu'un semis de maïs ou une prairie, ou bien sont disposés en tas autour de la parcelle à protéger.

Lorsque l'animal arrive sur la surface protégée, il est attiré par l'odeur de l'appât constitué par les granulés. Il mange alors quelques granulés et l'amertume diffusée dans sa bouche le contraint à quitter la parcelle protégée.

Bien entendu, l'invention n'est pas limitée à l'exemple que l'on vient de décrire et on peut apporter à celui-ci de nombreuses modifications sans sortir du cadre de l'invention.

Ainsi, le support 1 du granulé pourrait être réalisé par moulage et pressage avant d'être enrobé par pulvérisation de la paraffine.

## Revendications

1. Granulé répulsif pour animaux, notamment pour sangliers, caractérisé en ce qu'il comprend un support (1) imprégné d'une substance répulsive, ledit support (1) étant enrobé d'une pellicule d'enrobage (2) contenant une substance attractive pour lesdits animaux.

2. Granulé répulsif conforme à la revendication 1, caractérisé en ce que ladite substance attractive est une matière appétente.

3. Granulé conforme à la revendication 2, caractérisé en ce que ladite matière appétente comprend de l'huile de poisson.

4. Granulé répulsif conforme à l'une des revendications 1 à 3, caractérisé en ce que ladite substance répulsive est une substance amère.

5. Granulé répulsif conforme à la revendication 4, caractérisé en ce que la substance amère est de l'acide phosphorique.

6. Granulé conforme à l'une des revendications 1 à 5, caractérisé en ce que ladite pellicule d'enrobage (2) est étanche à l'eau.

7. Granulé conforme à l'une des revendications 1 à 6, caractérisé en ce que la pellicule d'enrobage (2) est de la paraffine.

8. Granulé conforme à l'une des revendications 1 à 7, caractérisé en ce que le support (1) comporte des farines végétales, telles que de la farine de maïs.

9. Granulé conforme à la revendication 8, caractérisé en ce que le support (1) comporte en outre de la farine de poisson.

10. Procédé pour fabriquer un granulé conforme à l'une des revendications 1 à 9, caractérisé en ce qu'il comprend les étapes suivantes:
a) mélange de farines végétales, d'amidon et d'une substance répulsive;
b) extrusion dudit mélange;
c) découpe sous forme de granulés du mélange extrudé; et
d) pulvérisation d'une pellicule d'enrobage contenant une substance attractive sur lesdits granulés.
